# FASCICULE DE BREVET EUROPEEN

(11) **EP 0 906 742 B1**
(45) Date de publication et mention de la délivrance du brevet: **23.04.2003**
(21) Numéro de dépôt: 98402288.9
(22) Date de dépôt: 16.09.1998
(51) Int. Cl.: A47J 45/10

(54) **Dispositif de préhension amovible pour récipient**
Abnehmbare vorrichtung zum greifen eines geschirrs
Removable device for gripping a recipient

(30) Priorité: 01.10.1997 FR 9712224
(43) Date de publication de la demande: 07.04.1999
(73) Titulaire: SEB S.A., 69130 Ecully (FR)
(72) Inventeur: Montgelard, Michel, 74960 Cran Gevrier (FR)
(74) Mandataire: Keib, Gérard

(56) Documents cités:
- FR-A- 2 207 672
- FR-A- 2 739 772
- US-A- 1 635 119

## Description

La présente invention concerne un dispositif de préhension amovible pour récipient, et notamment pour ustensile culinaire.

On connaît des poêles ou des casseroles dont la queue ou les anses sont amovibles. Un tel dispositif de préhension amovible est décrit dans la demande de brevet FR 2 739 772 au nom de la Demanderesse.

Il est prévu pour un récipient, notamment un ustensile culinaire qui comporte une paroi latérale dite jupe ayant un bord recourbé.

Ce dispositif de préhension comprend deux organes formant pince montés sur un corps de préhension et ayant une extrémité de forme complémentaire respectivement à la surface intérieure et extérieure d'une partie de la jupe et du bord recourbé du récipient et des moyens de déplacement adaptés à déplacer ces organes l'un par rapport à l'autre entre une position ouverte et une position fermée dans laquelle les extrémités d'organes pincent la jupe du récipient. L'un des organes est mobile en translation par rapport au corps de préhension, les moyens de déplacement comprenant un levier monté en pivotement sur le corps de préhension entre une position écartée et une position escamotée à l'intérieur du corps de préhension et une lame formant bielle s'étend entre le levier et l'organe mobile et est adaptée à déplacer l'organe mobile en translation lorsque le levier est pivoté.

Ce dispositif comprend des moyens de verrouillage adaptés à maintenir les organes en position fermée l'un par rapport à l'autre.

Un bouton de déverrouillage est prévu sur le levier pivotant. Le corps de préhension comporte un évidement disposé de telle sorte qu'en position fermée, le bouton de déverrouillage est logé dans cet évidement et traverse le corps de préhension.

Pour déverrouiller le dispositif de préhension, l'utilisateur appuie avec un doigt sur ce bouton.

Il faut donc, lors du déverrouillage du dispositif à la fois appuyer sur le bouton de déverrouillage et ne pas serrer le corps de préhension du dispositif afin de permettre au levier de pivoter hors du corps de préhension.

Cependant, lorsqu'on appuie avec le pouce sur le bouton, les autres doigts de la main se trouvent en opposition, sous le corps de préhension, et empêchent le pivotement du levier si l'utilisateur ne relâche pas la pression exercée par les doigts sur le corps de préhension.

Cette manipulation n'est pas toujours évidente pour tous les utilisateurs.

En outre, dans ce dispositif connu, le bouton de déverrouillage est fixé au levier à proximité de son axe de pivotement et requiert par conséquent, une force importante pour déplacer le levier.

La présente invention a pour but de remédier aux inconvénients précités et propose un dispositif de préhension amovible de manipulation simplifiée lors du déverrouillage.

Le dispositif de préhension amovible pour récipient, notamment pour ustensile culinaire, comporte deux organes formant pince montés sur un corps de préhension et adaptés à pincer un rebord du récipient, et des moyens de déplacement adaptés à déplacer les organes l'un par rapport à l'autre entre une position ouverte et une position fermée dans laquelle les organes pincent le rebord du récipient, l'un des organes étant mobile en translation par rapport au corps de préhension et les moyens de déplacement comprennant un levier monté en pivotement sur le corps de préhension entre une position écartée et une position escamotée à l'intérieur du corps de préhension, une lame formant bielle s'étendant entre le levier et l'organe mobile et étant adaptée à déplacer l'organe mobile en translation lorsque le levier est pivoté.

Selon l'invention, le levier comporte au moins une portion d'aile latérale formant bouton de déverrouillage et adaptée à former une saillie sur un côté du corps de préhension lorsque le levier est dans la position escamotée.

Le dispositif de préhension conforme à l'invention permet à l'utilisateur d'ouvrir plus facilement la pince refermée sur le rebord du récipient.

En effet, en décalant le bouton de déverrouillage sur un côté du corps de préhension, l'utilisateur doit, pour appuyer avec un doigt sur ce bouton, faire pivoter sa main autour du corps de préhension de sorte que les doigts se retrouvent sur les côtés du corps de préhension et non plus en regard du levier.

Selon une version avantageuse de l'invention, le levier comporte deux portions d'aile latérale disposées symétriquement par rapport à un axe longitudinal du levier et adaptées à former une saillie respectivement sur les côtés du corps de préhension.

Cette disposition permet à l'utilisateur d'actionner les boutons de déverrouillage indifféremment avec les doigts d'une main disposés de part et d'autre du corps de préhension, c'est-à-dire par exemple avec le pouce ou l'index.

En outre, le déverrouillage s'effectuant de manière plus naturelle et aisée avec le pouce, les deux portions d'aile du levier permettent d'ouvrir le dispositif de préhension aussi bien avec la main droite que la main gauche.

De préférence, la portion d'aile latérale s'étend sur le levier sensiblement en regard d'un point de pivotement de la lame formant bielle dans le levier.

Le déverrouillage du dispositif de préhension, par le pivotement du levier, est ainsi facilité en exerçant une force sur le levier au niveau du point de pivotement de la lame formant bielle.

Selon une version préférée de l'invention, la portion d'aile latérale est située à proximité d'une première extrémité du levier opposée à une seconde extrémité du levier montée à pivotement sur le corps de préhension.

Cette structure offre un bras de levier important lors du déverrouillage, en disposant le bouton de déverrouillage à proximité de l'extrémité libre du levier pivotant sur le corps de préhension.

D'autres particularités et avantages de l'invention apparaîtront encore dans la description ci-après.

Aux dessins annexés, donnés à titre d'exemples non limitatifs :
- la figure 1 est une vue de dessous du dispositif de préhension conforme à l'invention, en position ouverte ;
- la figure 2 est une vue de dessus du dispositif de la figure 1, en position ouverte ;
- la figure 3 est une vue en coupe selon la ligne III-III à la figure 2 ;
- la figure 4 est une vue en perspective du dispositif conforme à l'invention en position ouverte ;
- la figure 5 est une vue de dessus du dispositif de la figure 1, en position fermée ; et
- la figure 6 est une vue en coupe selon la ligne VI-VI à la figure 5.

Le dispositif de préhension amovible conforme à l'invention est prévu notamment pour un ustensile culinaire, tel qu'une casserole ou une poêle.

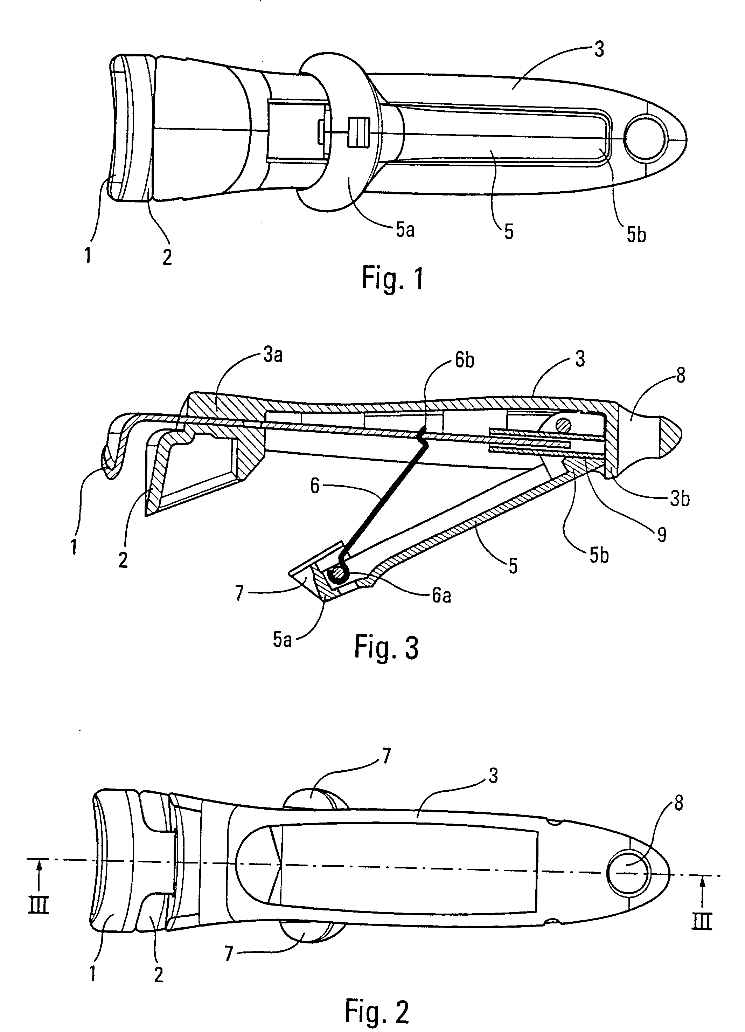

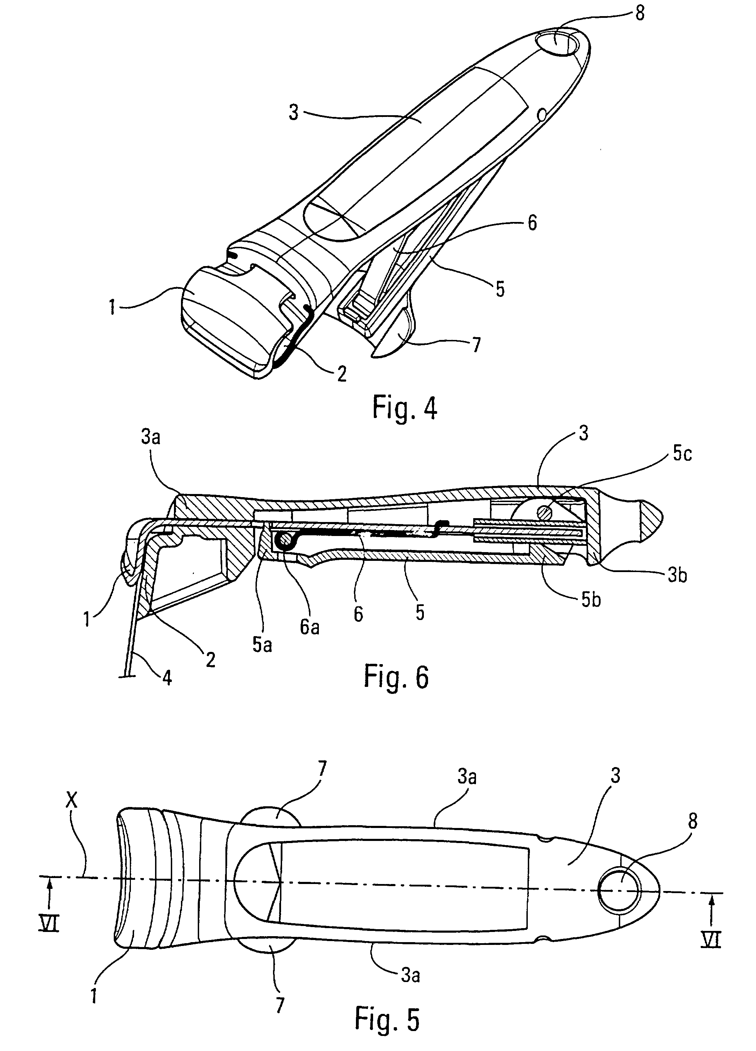

Comme illustré à la figure 3, il comporte deux organes 1, 2 formant pince montés sur un corps de préhension 3 et adaptés à pincer un rebord 4 du récipient (voir figure 6).

L'un des organes 1 est mobile en translation par rapport au corps de préhension 3 et l'autre organe 2 de la pince est fixe par rapport au corps de préhension 3. Dans cet exemple, l'autre organe 2 est formé d'une extrémité 3a du corps de préhension 3.

Dans cet exemple, les organes 1 et 2 ont chacun une extrémité qui a une forme complémentaire de la surface intérieure ou extérieure du rebord de la jupe du récipient. Ce rebord 4 est recourbé pour former un bec verseur.

Le corps de préhension 3 a la forme d'une queue de casserole avec, à son extrémité libre 3b, une ouverture 8 pouvant permettre la suspension du dispositif à un crochet.

Des moyens de déplacement 5, 6 sont adaptés à déplacer l'organe 1 par rapport à l'organe 2 entre une position ouverte, illustrée à la figure 3, et une position fermée, illustrée à la figure 6, dans laquelle les extrémités des organes 1,2 pincent le rebord 4 du récipient 1.

Ces moyens de déplacement comprennent un levier 5 monté en pivotement sur le corps de préhension 3 entre une position écartée et une position escamotée à l'intérieur du corps de préhension 3.

Ce dernier comprend ainsi, un logement adapté à recevoir le levier en position escamotée, correspondant à la position fermée des organes 1 et 2 formant pince.

Ainsi, lorsque le dispositif de préhension est fixé sur le récipient, il a sensiblement la forme extérieure d'une queue classique de casserole.

Le levier 12 pivote autour d'un axe 5c fixé au corps de préhension 3.

Une lame formant bielle 6 s'étend entre le levier 5 et l'organe mobile 1 et est adaptée à déplacer l'organe mobile 1 en translation lorsque le levier 5 est pivoté.

La lame formant bielle 6 est monté en pivotement autour d'un axe 6a solidaire du levier 5 et est solidaire par son autre extrémité 6b à l'organe mobile 1.

Ce dernier est formé d'une plaque allongée, dont une extrémité est recourbée pour pincer le rebord 4 du récipient. Cette extrémité de l'organe 1 débouche hors du corps de préhension 3 en regard du second organe fixe 2 de la pince.

L'autre extrémité de la plaque allongée formant l'organe mobile 1 est de préférence guidée en translation à l'intérieur du corps de préhension 3 par un conduit ou rail de guidage 9.

Ainsi, lorsque le levier 5 est pivoté autour de son axe 5c solidaire du corps de préhension 3, l'extrémité 6a de la bielle 6 introduite dans le levier 5 est également pivotée en rotation de sorte qu'en fin de course du levier, la bielle 6 est alignée avec l'axe de translation de l'organe 1, c'est-à-dire l'axe longitudinal X du corps de préhension 3.

La lame formant bielle 6 de par sa conception est suffisamment élastique pour pouvoir être légèrement comprimée lorsque le dispositif est fermé et ajuster ainsi l'écartement entre les deux organes 1 et 2 pour compenser les différents diamètres et les différentes épaisseurs des articles culinaires.

La lame 6 a ainsi un profil légèrement courbe entre ses deux extrémités montées respectivement sur l'organe mobile 1 et le levier 5, le rayon de courbure de ce profil étant légèrement diminué lorsque la lame 6 est comprimée.

En position fermée du dispositif, la lame formant bielle 6 s'étend dans une direction parallèle à l'axe de translation X de l'organe mobile 1, c'est-à-dire perpendiculaire à une portion de jupe du récipient 1 recevant le dispositif, et est adaptée à exercer une force sur l'extrémité de l'organe mobile 1 et à exercer une force de même direction et de sens opposé sur l'extrémité de l'autre organe 2.

Cette lame formant bielle est bien décrite dans la demande de brevet FR 2 739 772 dont le contenu est incorporé ici par référence.

Conformément à l'invention, le levier comporte au moins une portion d'aile latérale 7 formant bouton de déverrouillage et adaptée à former une saillie sur un côté 3a du corps de préhension 3 lorsque le levier 5 est dans sa position escamotée comme illustrée à la figure 5.

Dans cet exemple, le levier 5 comporte deux portions d'aile latérale disposées symétriquement par rapport à un axe longitudinal du levier et adaptées à former une saillie respectivement sur les côtés du corps de préhension.

Ces deux portions d'aile 7 sont constituées ici des deux extrémités d'une pièce Sa en forme d'anneau semi-circulaire formant l'extrémité libre du levier 5.

Cette extrémité libre 5a du levier épouse ainsi en position fermée du dispositif un tronçon de la partie inférieure et des côtés 3a du corps de préhension 3.

Dans cette description, les parties supérieure et inférieure du corps de préhension 3 sont repérées lorsque le dispositif de préhension est fixé sur un récipient.

Les deux portions d'aile latérale 7 forment de part et d'autre du corps de préhension 3 une saillie 7 de surface plane orientée vers la partie supérieure du corps de préhension 3.

Ces surfaces planes constituent ainsi le bouton de déverrouillage du dispositif.

Les portions d'aile latérale 7, et la pièce en forme d'anneau 5a, s'étendent sur le levier 5 sensiblement en regard du point de pivotement 6a de la lame formant bielle 6 dans le levier 5.

Les portions d'aile latérale 7 sont également situées à proximité de l'extrémité Sa du levier 5 opposé à la seconde extrémité 5b du levier 5 montée à pivotement autour de l'axe 5c sur le corps de préhension 3.

La seconde extrémité 5b du levier 5 est fixée à proximité de l'extrémité libre 3b du corps de préhension 3 opposée aux organes 1,2 formant pince et le levier 5 est fixé sous le corps de préhension 3.

En fonctionnement, le dispositif de préhension est positionné, en position ouverte, sur le rebord du récipient, l'utilisateur tenant en principe la poignée avec le pouce sur la partie supérieure du corps de préhension 3 et les autres doigts sous le corps de préhension 3.

En refermant la main, l'utilisateur fait pivoter le levier 5 jusqu'à ce que le levier 5 soit logé dans le corps de préhension 3.

La lame formant bielle 6 est alors disposée parallèlement à l'organe mobile 1, en fin de course de son pivotement, le dispositif étant ainsi verrouillé par la force de rappel de la lame formant bielle élastique 6 qui exerce une force à la fois sur l'organe mobile 1, à l'extrémité 6b de la lame 6, et sur le corps de préhension 3, par l'intermédiaire du levier 5, à l'extrémité 6a de lame 6.

Pour déverrouiller le dispositif de préhension, il suffit à l'utilisateur d'appuyer sur l'un ou les deux boutons de déverrouillage 7 pour déloger le levier 5 du corps de préhension 3 et écarter ainsi l'organe mobile 1 de l'autre organe fixe 2 de la pince.

Bien entendu, de nombreuses modifications peuvent être apportées à l'exemple décrit ci-dessus sans sortir du cadre de l'invention.

Ainsi, la lame formant bielle 6, suffisamment élastique pour l'ajustement de la distance entre les organes 1, 2 formant pince, peut être remplacée par une lame formant bielle associée à un ressort de compensation comme décrit par exemple dans la demande de brevet FR 2 739 772.

## Revendications

1. Dispositif de préhension amovible pour récipient, notamment pour ustensile culinaire, comportant deux organes (1, 2) formant pince montés sur un corps de préhension (3) et adaptés à pincer un rebord (4) du récipient, et des moyens de déplacement (5, 6) adaptés à déplacer les organes (1, 2) l'un par rapport à l'autre entre une position ouverte et une position fermée dans laquelle les organes (1, 2) pincent le rebord (4) du récipient, l'un des organes (1) étant mobile en translation par rapport au corps de préhension (3) et les moyens de déplacement comprennant un levier (5) monté en pivotement sur le corps de préhension (3) entre une position écartée et une position escamotée à l'intérieur du corps de préhension (3), une lame formant bielle (6) s'étendant entre le levier (5) et l'organe mobile (1) et étant adaptée à déplacer l'organe mobile (1) en translation lorsque le levier (5) est pivoté, **caractérisé en ce que** le levier (5) comporte au moins une portion d'aile latérale (7) formant bouton de déverrouillage et adaptée à former une saillie sur un côté (3a) du corps de préhension (3) lorsque le levier (5) est dans ladite position escamotée.

2. Dispositif de préhension conforme à la revendication 1, **caractérisé en ce que** le levier (5) comporte deux portions d'aile latérale (7) disposées symétriquement par rapport à un axe longitudinal (X) du levier (5) et adaptées à former une saillie respectivement sur les côtés (3a) du corps de préhension (3).

3. Dispositif de préhension conforme à l'une des revendications 1 ou 2, **caractérisé en ce que** la portion d'aile latérale (7) s'étend sur le levier (3) sensiblement en regard d'un point de pivotement (6a) de la lame formant bielle (6) dans le levier (5).

4. Dispositif de préhension conforme à l'une des revendications 1 à 3, **caractérisé en ce que** ladite portion d'aile latérale (7) est située à proximité d'une première extrémité (5a) du levier (5) opposée à une seconde extrémité (5b) du levier (5) montée à pivotement sur le corps de préhension (3).

5. Dispositif de préhension conforme à la revendication 4, **caractérisé en ce que** ladite seconde extrémité (5b) du levier (5) est fixée à proximité d'une extrémité libre (3b) du corps de préhension (3) opposée aux organes (1, 2) formant pince.

6. Dispositif de préhension conforme à l'une des revendications 1 à 5, **caractérisé en ce que** le levier (5) est fixé sous le corps de préhension (3).

## Patentansprüche

1. Abnehmbare Greifvorrichtung für einen Behälter, insbesondere für Küchengeräte, mit zwei eine Zange bildenden Bauteilen (1, 2), die auf einem Greifkörper (3) angebracht sind und einen Rand (4) des Behälters einklemmen können, und Verstellmitteln (5, 6), die die Bauteile (1, 2) gegeneinander zwischen einer offenen Stellung und einer geschlossenen Stellung, in der die Bauteile (1, 2) den Rand (4) des Behälters einklemmen, versetzen können, wobei eines der Bauteile (1) gegenüber der Greifvorrichtung (3) translatorisch beweglich ist und die Verstellmittel einen Hebel (5) aufweisen, der schwenkbar auf dem Greifkörper (3) zwischen einer weit geöffneten Stellung und einer im Inneren des Greifkörpers zusammengeklappten Stellung angebracht ist, wobei sich eine ein Zwischenglied (6) formende Zunge zwischen dem Hebel (5) und dem beweglichen Bauteil (1) erstreckt und das translatorisch bewegliche Bauteil (1) ersetzen kann, wenn der Hebel (5) verschwenkt wird, **dadurch gekennzeichnet, dass** der Hebel (5) mindestens ein seitliches Flügelstück (7) aufweist, das einen Freigabe-Knopf darstellt und einen Vorsprung auf einer Seite (3a) des Greifkörpers (3) bilden kann, wenn der Hebel (5) in der zusammengeklappten Stellung ist.

2. Greifvorrichtung nach Anspruch 1, **dadurch gekennzeichnet, dass** der Hebel (5) zwei seitliche Flügelstücke (7) aufweist, die symmetrisch zu einer Längsachse (X) des Hebels (5) angeordnet sind und jeweils einen Vorsprung an den Seiten (3a) des Greifkörpers (3) bilden können.

3. Greifvorrichtung nach einem der Ansprüche 1 oder 2, **dadurch gekennzeichnet, dass** das seitliche Flügelstück (7) sich an dem Hebel (3) im wesentlichen hinsichtlich eines Schwenkpunktes (6a) der Platte erstreckt, die das Zwischenglied (6) im Hebel (5) bildet.

4. Greifvorrichtung nach einem der Ansprüche 1 bis 3, **dadurch gekennzeichnet, dass** das seitliche Flügelstück (7) in der Nähe eines ersten Endes (5a) des Hebels (5) gegenüber einem zweiten Ende (5b) des Hebels (5) angeordnet ist, das schwenkbar an dem Greifkörper (3) angebracht ist.

5. Greifvorrichtung nach Anspruch 4, **dadurch gekennzeichnet, dass** das zweite Ende (5b) des Hebels (5) in der Nähe eines freien Endes (3b) des Greifkörpers (3) gegenüber den eine Zange bildenden Bauteilen (1, 2) befestigt ist.

6. Greifvorrichtung nach einem der Ansprüche 1 bis 5, **dadurch gekennzeichnet, dass** der Hebel (5) unter dem Greifkörper (3) befestigt ist.

## Claims

1. Removable gripping device for a receptacle, particularly for a kitchen utensil, comprising two members (1, 2) forming a gripper which are mounted on a gripper body (3) and designed to grip an edge (4) of the receptacle, and movement means (5, 6) designed to move the members (1, 2) one with respect to the other between an open position and a closed position in which the members (1, 2) grip the edge (4) of the receptacle, one of the members (1) being able to move in terms of translation with respect to the gripper body (3) and the movement means comprising a lever (5) pivot-mounted on the gripper body (3) so that it can pivot between a position spaced away from and a position nested inside the gripper body (3), a leaf forming a link rod (6) stretching between the lever (5) and the moving member (1) and being designed to move the moving member (1) in terms of translation when the lever (5) is pivoted, **characterized in that** the lever (5) comprises at least one lateral flange portion (7) forming an unlatching button and designed to project from a side (3a) of the gripper body (3) when the lever (5) is in the said nested position.

2. Gripper device according to Claim 1, **characterized in that** the lever (5) comprises two lateral flange portions (7) which are arranged symmetrically with respect to a longitudinal axis (X) of the lever (5) and designed to form a projection one on each of the sides (3a) of the gripper body (3).

3. Gripping device according to one of Claims 1 and 2, **characterized in that** the lateral flange portion (7) extends on the lever (3) roughly opposite a pivot point (6a) of the link-rod-forming blade (6) in the lever (5).

4. Gripper device according to one of Claims 1 to 3, **characterized in that** the said lateral flange portion (7) is situated near a first end (5a) of the lever (5) which is the opposite end to a second end (5b) of the lever (5) which is pivot-mounted on the gripper body (3).

5. Gripper device according to Claim 4, **characterized in that** the said second end (5b) of the lever (5) is fixed near a free end (3b) of the gripper body (3), which free end is at the opposite end to the gripper-forming members (1, 2).

6. Gripper device according to one of Claims 1 to 5, **characterized in that** the lever (5) is fixed under the gripper body (3).
